# EUROPEAN PATENT APPLICATION

(11) **EP 2 182 437 A1**
(43) Date of publication of application: **05.05.2010**
(21) Application number: 09174531.5
(22) Date of filing: 29.10.2009
(51) Int. Cl.: G06F 9/445, G06F 9/455

(54) **Virtual machine system, management method of virtual machine system, and recording medium**

(30) Priority: 30.10.2008 JP 2008279853
(71) Applicant: FUJITSU LIMITED, Kawasaki-shi, Kanagawa 211-8588 (JP)
(72) Inventor: Sakai Atsushi, Kawasaki-shi Kanagawa 211-8588 (JP)
(74) Representative: Fenlon, Christine Lesley

(57) **Abstract**

According to an aspect of the embodiment, an agent is provided on a policy management server, and manages update information indicating an update of a guest OS and modification information for modifying the guest OS. The agent is provided on each host OS. The agent migrates a guest OS image stored in a storage device of a virtual machine server VMSA to a storage device of a virtual machine server VMSB, and modifies the migrated guest OS image according to the update information and the modification information.

## Description

### FIELD

The embodiments of the invention discussed herein are related to a virtual machine system, a management method of the virtual machine system, and a recording medium.

### BACKGROUND

A virtual machine server includes a plurality of virtual machines each of which is formed by OS (Operating System). A specific role is assigned to each of the plurality of virtual machines. A virtual machine or an OS which executes an application program (hereinafter, "application") is called a guest OS.

For example, there is a case that, in a virtual machine system connecting a plurality of virtual machines by a network, a guest OS of a virtual machine server is moved (migrated) to another virtual machine server. This is called a "migration" of the virtual machine or the guest OS. It is needed to prevent the guest OS from tampering in order to ensure security in the migration of the virtual machine.

An image input apparatus, a communication system and so on are proposed which prevent tampering of a digital image, and, for this purpose, which include means for generating tamper detection information by applying predetermined computations to digital images, and manage the tamper detection information by an image management apparatus on the network.

Further, an information processing system and an information processing method are proposed which include means for loading a system image including a boot image and system verification means for verifying the system image, and which make it possible to use a bootstrap code in the verified boot image and an OS activated by the bootstrap code.

Further, an OS version number management method of a computer network system is proposed which registers addresses of host computers and version number management information of the OS in a master computer and immediately updates the OS in order to improve efficiency of installing and upgrading operations.

Further, a network connection management system is proposed in which a new or existing computer terminal is automatically connected to a protected maintenance remote network when connecting to the network, and which examines safety, such as vulnerability and virus infections, of the computer terminal attempting the network connection and permits the connection by the computer terminal when the safety is confirmed.

Patent Document 1 : Japanese Laid-Open Patent Publication No. 2005-286823
Patent Document 2 : Japanese Laid-Open Patent Publication No. 2006-172376
Patent Document 3 : Japanese Laid-Open Patent Publication No. 9-44342
Patent Document 4 : Japanese Laid-Open Patent Publication No. 2006-18766

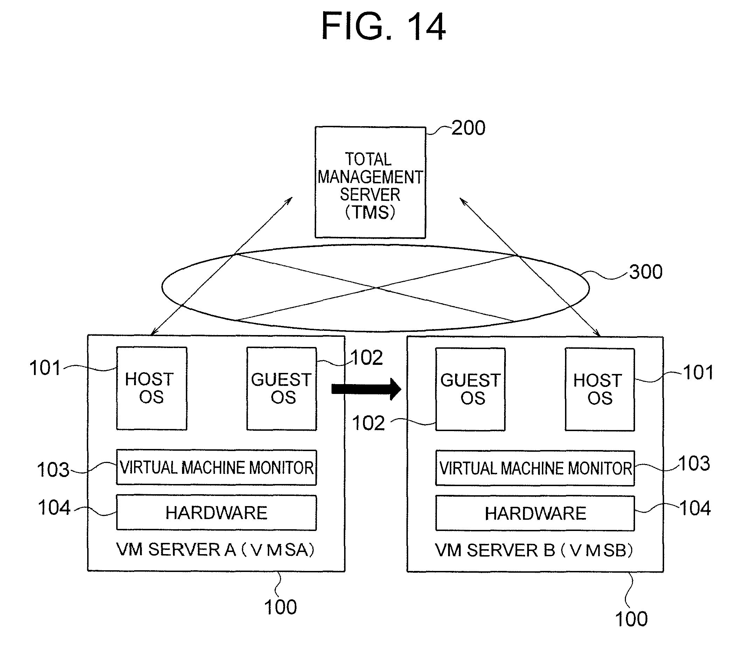

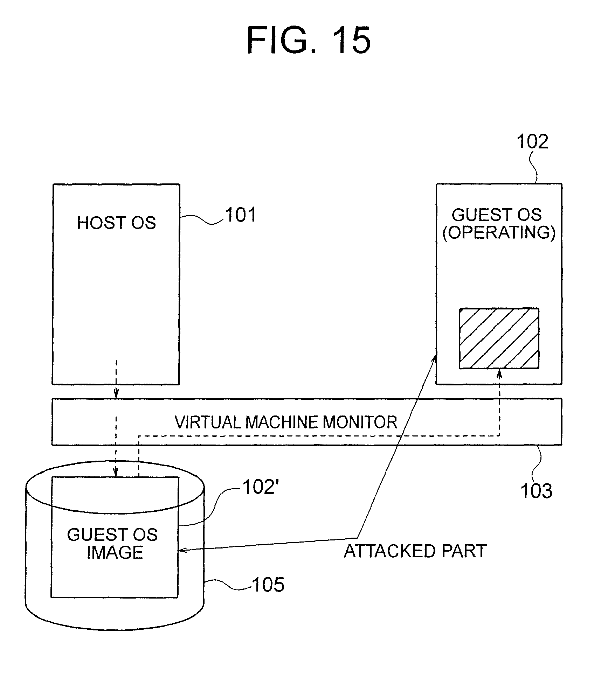

FIGS. 14 and 15 are diagrams for explaining the migration of a guest OS in a virtual machine system, which I studied.

In the virtual machine system illustrated in FIG. 14, a plurality of virtual machine servers (VMS) 100 are connected by a network 300. A total management server (TMS) 200 connected to the network 300 manages all migration of a guest OS 102.

The total management server 200 moves (migrates) a guest OS 102 of one virtual machine server VMSA to another virtual machine server VMSB. Due to this migration, actually, a guest OS image 102' in a magnetic disk device included in hardware (hardware resources) 104 of the virtual machine server VMSA is migrated (or copied) to a storage device 105 such as a magnetic disk device included in the hardware 104 of the virtual machine server VMSB. The guest OS image 102' is in the storage device 105, and is a guest OS 102 before activation. FIG. 15 only illustrates the guest OS image 102' in the virtual machine server VMSB.

In the virtual machine server VMSB, as illustrated in FIG. 15, a host OS 101 transmits an activation command of the migrated guest OS image 102' to a virtual machine monitor 103. In response, the virtual machine monitor 103 activates the guest OS image 102' migrated to the storage device 105, and as a result, the guest OS 102 is activated. In this case, the guest OS image 102' stored in the storage device 105 at the activation and the activated guest OS 102 are mainly attacked by viruses.

However, according to my study, only the guest OS image 102' just migrated (first generation) is managed in the all management described above. Therefore, the migration of the guest OS 102 is weak to attacks from dynamically changing environments, such as viruses changing in a short time (for example, week by week).

For example, the guest OS 102 is operated on various virtual machine servers 100. Therefore, there is a possibility that the guest OS image 102' is attacked by various viruses and so on at various timings. The guest OS 102 is frequently activated and terminated. Therefore, there is a possibility that the guest OS 102 is attacked by the viruses and so on at the activation and termination.

It would therefore be desirable to provide a virtual machine system, a management method of the virtual machine system, and a recording medium which are capable of preventing tampering of a program when a plurality of virtual machine servers are included.

### SUMMARY

According to an aspect of the invention (or at least an aspect of one embodiment), a virtual machine system includes a first information processing apparatus, a second information processing apparatus, a management apparatus, a management unit, and updating units. The first information processing apparatus further includes hardware resources including an arithmetic processing unit and a storage device, a plurality of virtual machines each including an OS operated on the arithmetic processing unit, and a virtual machine monitor controlling the plurality of virtual machines. The second information processing apparatus further includes hardware resources including an arithmetic processing unit and a storage device, a plurality of virtual machines each including the OS operated on the arithmetic processing unit, and a virtual machine monitor controlling the plurality of virtual machines. The management apparatus is connected to the first information processing apparatus and the second information processing apparatus through a network. The management unit is provided on the management apparatus, and manages update information indicating an update of the OS and modification information for modifying the OS. The updating units are provided on the first information processing apparatus and the second information processing apparatus, migrate an OS image that is the OS stored in the storage device of the first information processing apparatus to the storage device of the second information processing apparatus, and modify the OS image migrated to the storage device of the second information processing apparatus according to the update information and the modification information received from the management unit.

According to another aspect, a management method of a virtual machine system is executed in the virtual machine system and manages the virtual machine system.

According to still another aspect, a management program of a virtual machine system is executed in the virtual machine system and realizes the management method of the virtual machine system.

According to still another aspect, a recording medium of a management program of a virtual machine system provides a management program of the virtual machine system.

In the virtual machine system aspect and the management method of the virtual machine system aspect mentioned above an OS image moved (migrated) from the first virtual machine server to the second virtual machine server is modified in the second virtual machine server according to the update information and the modification information from the management server.

As a result, even if the migrated OS is attacked by various viruses and so on at various timings when the OS is operated on various virtual machine servers, the OS can be modified in advance to withstand the attack. Furthermore, even if the migrated OS is attacked by viruses and so on at the activation since the OS is frequently activated, the OS can be modified in advance to withstand the attack.

Therefore, the resistance to attacks from dynamically changing environments, such as viruses that changes in a short time, can be improved in the migrated OS. Especially, the vulnerability of the OS that depends on the time passage from the migration to the reactivation can be improved.

In the recording medium of the virtual machine system aspect above, the management method of the virtual machine system can be realized, and the above advantages can be attained.

Similarly, in the virtual machine system aspect, the above management method of the virtual machine system can be realized, and the above advantages can be attained.

### BRIEF DESCRIPTION OF THE DRAWINGS

Various features and aspects of the invention (or at least of embodiments of the invention) are described below with reference to the drawings. However, the invention is not necessarily limited to or by any of the aspects or features described. In the drawings
FIG. 1 is an example of a configuration of a virtual machine system;
FIG. 2 is an example of a configuration of an agent of a policy management server;
FIG. 3A is an example of a configuration of an OS latest version number table of the policy management server;
FIG. 3B is an example of a configuration of an OS latest state verification table of the policy management server;
FIG. 4 is a flowchart of creating a modification program or verification data of an OS and an application;
FIG. 5A is a configuration example of a management table of a guest OS of the policy management server;
FIG. 5B is a flowchart of policy setting of the guest OS of the policy management server;
FIG. 6 is a flowchart of generating a domain;
FIG. 7 is an example of a configuration of an agent of a virtual machine server;
FIG. 8 is a flowchart of generating modification related information for virtual machine;
FIG. 9 is an operation of creating a modified image of an OS image;
FIG. 10 is a flowchart of monitoring the OS image in the activation of the guest OS;
FIG. 11 is a flowchart of modifying the OS image;
FIG. 12 is a flowchart of registering boot information;
FIG. 13 is a flowchart of verifying the modification of the OS image; and
FIGS. 14 and 15 are an explanatory view of the migration of a guest OS studied by the present inventor.

### DETAILED DESCRIPTION

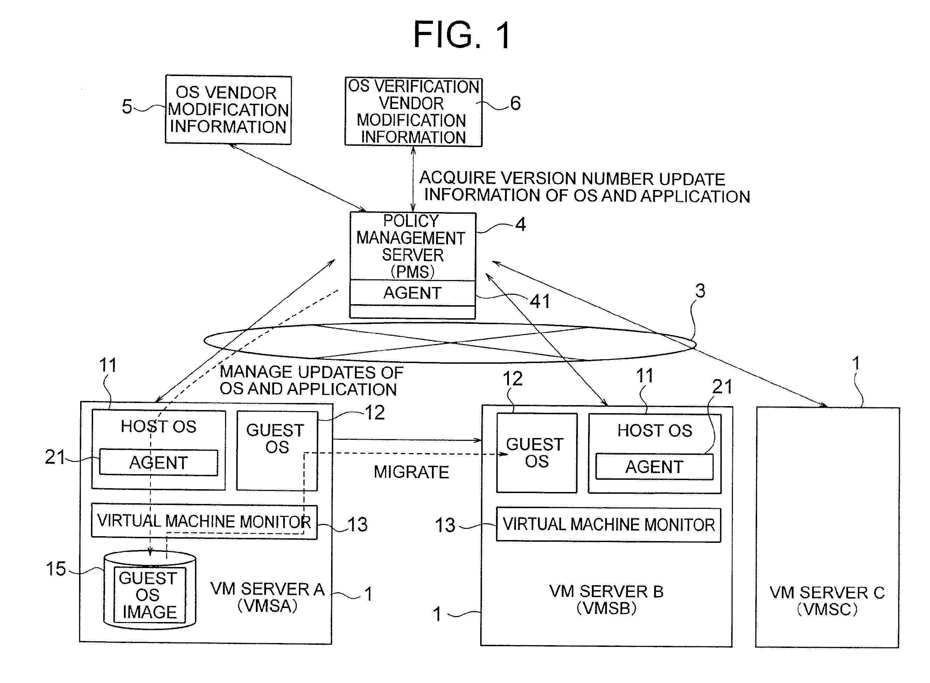

FIG. 1 is a configuration of a virtual machine system as an example of an aspect of the embodiment.

The virtual machine system includes a plurality of virtual machine servers (VMS) 1 which are information processing apparatuses, a policy management server (PMS) 4 which is a management apparatus, and a network 3 which connects the virtual machine servers 1 and the policy management server 4. The plurality of virtual machine servers 1 have the same configuration. Accompanying symbol A and so on are attached to the symbol VMS in illustration such as virtual machine servers VMSA, VMSB and so on to distinguish the plurality of virtual machine servers 1.

The virtual machine server 1 includes a virtual machine monitor (VMM, or Hypervisor) 13, and a plurality of virtual machines (VM) 11 and 12. The virtual machines 11 and 12, and the virtual machine monitor 13 are operated on hardware. The hardware includes hardware resources, such as a physical CPU (Central Processing Unit or arithmetic processing unit) and a storage device 15.

As described, the virtual machine server 1 includes a plurality of virtual machines 11 and 12. Specifically, a host OS (operating system or control program) 11 and a guest OS 12 are the virtual machines 11 and 12, respectively. Each of the OSes 11 and 12 acquires a control right of a physical (or real) CPU of the hardware, and the OSes 11 and 12 are executed on the physical CPU, whereby the virtual machines 11 and 12 are realized. The virtual machine monitor 13 is also realized in the same way.

The virtual machine monitor 13 controls the entire virtual machine server 1. More specifically, the virtual machine monitor 13 dispatches the plurality of virtual machines 11 and 12 or the OSes 11 and 12, in other words, assigns the control right of the physical CPU, emulates privileged instructions executed by the OSes 11 and 12, and controls hardware such as the physical CPU.

Single host OS 11 is provided, and is operated as a virtual machine (domain). The host OS 11 is assigned the control right of the physical CPU by the virtual machine monitor 13, and manages the entire virtual machine system. The host OS 11 is activated at a time of boot of the virtual machine server 1, and controls the guest OS 12 (controls the guest OS 12 including the activation and the termination). At the same time, the host OS 11 can also be operated as a driver OS.

The guest OS 12 is an OS which does not have a physical I/O device. The guest OS 12 can be considered as a normal (so-called) OS. For example, an application program (hereinafter, "application") is executed and operated on any of the guest OSes 12. The guest OS 12 can execute an I/O command by requesting execution of the I/O command to the driver OS.

The virtual machine server 1 also includes a driver OS in addition to the host OS 11 and the guest OS 12. The driver OS is an OS that controls a physical (or real) input/output device (I/O device). A plurality of types of physical I/O devices includes the storage device 15, the network 3 and so on. The driver OS is provided for each of the plurality of types of physical I/O devices. The driver OS controls the physical I/O device. The driver OS can also be operated on the host OS 11 and the guest OS 12. When the driver OS is operated on the guest OS 12, the guest OS 12 appears as the driver OS.

The storage device 15 stores a guest OS image (guest domain image). The storage device 15 is, for example, a magnetic disk device. The storage device 15 may be a non-volatile storage device other than the magnetic disk device.

In the example of FIG. 1, the guest OS (guest OS image) 12 is moved (migrated) from the virtual machine server VMSA to the virtual machine server VMSB, as described below. An application executed on the guest OS 12 is also migrated from the virtual machine server VMSA to the virtual machine server VMSB in the same way as the guest OS 12.

Each of the plurality of virtual machine servers 1 includes an agent 21, which is provided on the host OS 11, for the migration. The policy management server 4 includes an agent 41, OS vendor modification information 5, and OS verification vendor modification information 6.

The guest OS 12 may be migrated between any virtual machine servers 1. The migration of the guest OS 12 is described in the example of FIG. 1. However, the embodiment is not limited to this, and can be applied to migrations of the host OS 11, the driver OS, and various programs executed by the host OS 11 and the driver OS.

In the policy management server 4, the agent 41 acquires (creates) update information and modification information of the version number and so on of the guest OS 12, based on the OS vendor modification information 5 and the OS verification vendor modification information 6. The policy management server 4 transmits the acquired update information and the acquired modification information to the virtual machine servers 1 through the network 3.

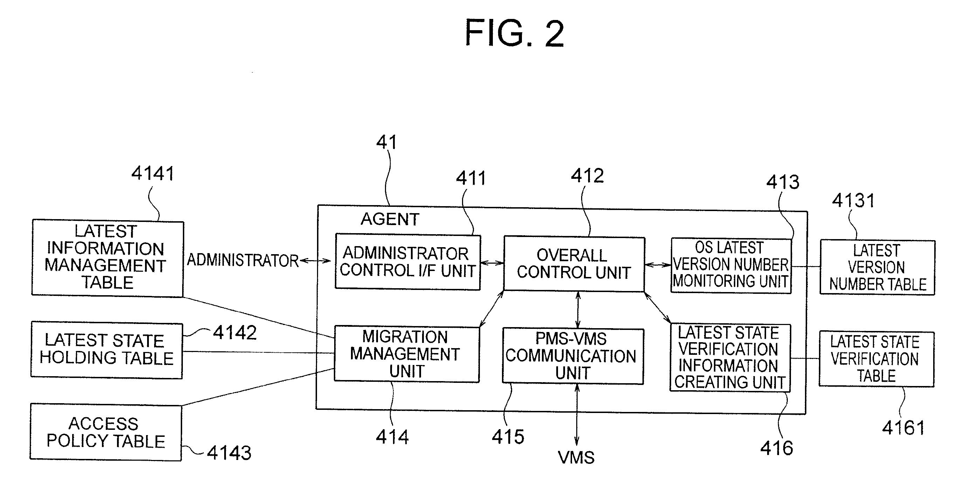

The agent 41 tracks updates of the guest OS 12, and manages the update status of the guest OS 12. In order to track the updates, the agent 41 tracks updates of the guest OS 12 from a website and so on of the vendor (developer) of the guest OS 12, and applies the updates to the virtual machine server 1. The agent 41 also creates a program for confirmation of applying the updates. In order to manage the update status of the guest OS 12, the agent 41 manages update policies of the guest OS 12, and manages the update status of the guest OS 12. According to the update policies, the agent 41 responds to an inquiry of the existence of updates of the guest OS 12 from the virtual machine server 1. The agent 41 is described below with reference to FIGS. 2 to 6.

The OS vendor modification information 5 is information including, for example, OS version number, modification information, and application version number, for each type of the guest OS 12. The OS verification vendor modification information 6 is information including, for example, modification program information and verification information, for each type of the guest OS 12. Any one of the OS vendor modification information 5 and the OS verification vendor modification information 6 may include the OS version number, modification information, application version number, modification program information, and the verification information. It is sufficient when a latest version number table 4131 and a latest state verification table 4161 described below can be created based on the OS vendor modification information 5 and the OS verification vendor modification information 6. For example, the OS vendor modification information 5 and the OS verification vendor modification information 6 can be one piece of information. In other words, information for creating the latest version number table 4131 and the latest state verification table 4161 is provided by the OS vendor modification information 5 and the OS verification vendor modification information 6.

As described above, the OS vendor modification information 5 and the OS verification vendor modification information 6 are notified from the website and so on of the vendor through the Internet, for example. The OS vendor modification information 5 and the OS verification vendor modification information 6 may also be downloaded from a homepage and so on of the vendor through the Internet, or may be stored and inputted from the recording medium.

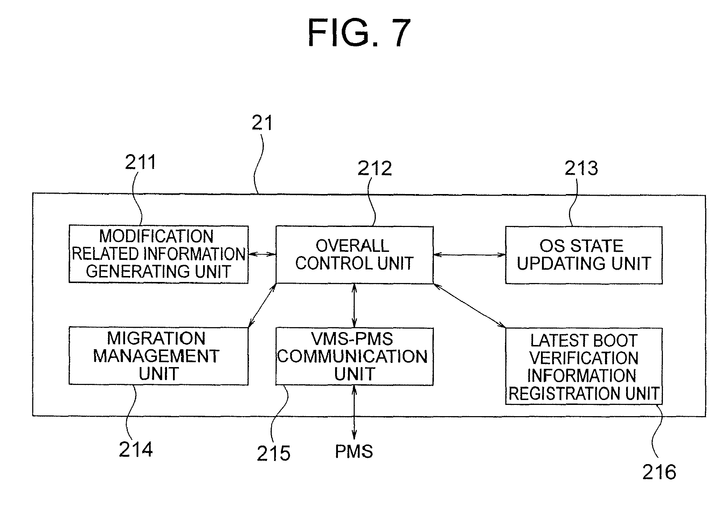

In each host OS 11, the agent 21 tracks updates of various OSes of the virtual machine server 1 through the policy management server 4, and manages the update status. Specifically, the agent 21 includes means for tracking updates of the OSes, and means for creating a program for applying the update information from the virtual machine monitor 13 or a program for confirmation of applying the update. The agent 21 is described below with reference to FIGS. 7 to 13.

The agent 41 included in the policy management server (PMS) 4 and processing of the agent 41 is described with reference to FIGS. 2 to 6.

FIG. 2 is an example of a configuration of the agent 41 of the policy management server (PMS) 4.

The agent 41 includes an administrator control I/F unit 411, an overall control unit 412, an OS latest version number monitoring unit 413, a migration management unit 414, a PMS-VMS communication unit 415, and a latest state verification information creating unit 416.

The overall control unit 412 controls the entire agent 41. The PMS-VMS communication unit 415 communicates between the policy management server 4 and the virtual machine server 1.

The administrator control I/F unit 411 is an input/output interface, and is used by the administrator (administrating person) of the virtual machine system or the policy management server 4. By using the administrator control I/F unit 411, the administrator inputs various instructions into the agent 41, and obtains various outputs from the agent 41. For example, from the administrator control I/F unit 411, the administrator inputs an instruction for generating (migrating) the guest OS 12 from the virtual machine server VMSA to the virtual machine server VMSB. The instruction is a modification related information generation command described below. The instruction is transmitted to the virtual machine servers VMSA and VMSB through the PMS-VMS communication unit 415.

The OS latest version number monitoring unit 413 is a tracking unit which tracks updates of the OSes. For example, the OS latest version number monitoring unit 413 receives a notification of a change in the guest OS 12 or the application from a site of the vendor through the Internet. Then, the OS latest version number monitoring unit 413 acquires the OS vendor modification information 5 and the OS verification vendor modification information 6 from the site. And, the OS latest version number monitoring unit 413 creates the latest version number table 4131 based on the received information. The latest version number table 4131 is update information indicating updates of the guest OS 12. The OS latest version number monitoring unit 413 also notifies the reception of the change notification to the latest state verification information creating unit 416 through the overall control unit 412.

The latest state verification information creating unit 416 is a status management unit which manages the status of the OSes. For example, the latest state verification information creating unit 416 receives a notification from the OS latest version number monitoring unit 413. Then, the latest state verification information creating unit 416 acquires the OS vendor modification information 5 and the OS verification vendor modification information 6 from the OS latest version number monitoring unit 413, and creates the latest state verification table 4161 based on the received information. The latest state verification table 4161 is modification information for modifying the guest OS 12.

In this way, the agent 41 manages the update information and the modification information for the guest OS 12. As described above, in addition to the guest OS 12, the agent 41 manages the update information indicating updates of the application and the modification information for modifying the application.

The migration management unit 414 manages the migration for the guest OS 12. For this purpose, the migration management unit 414 creates a latest information management table 4141, a latest state holding table 4142, and an access policy table 4143. The tables 4141 to 4143 integrally form migration management information.

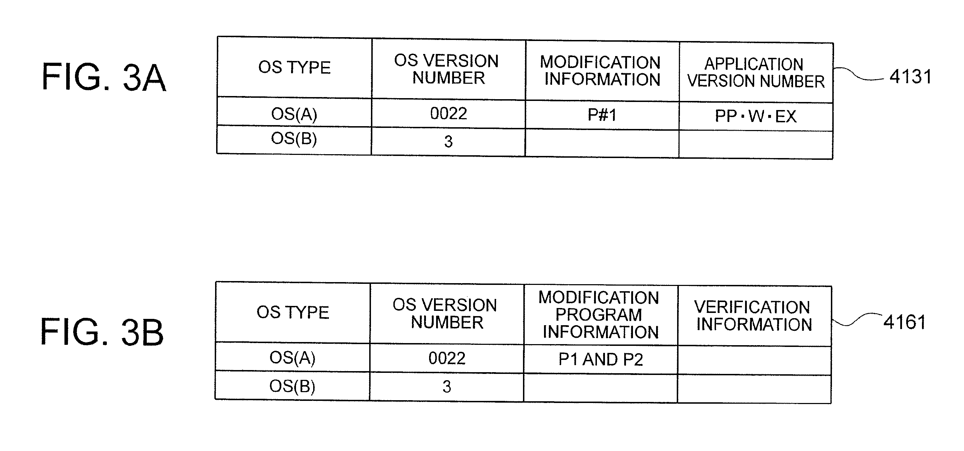

FIGS. 3A and 3B are examples of configurations of the latest version number table 4131 and the latest state verification table 4161 of the policy management server 4.

The latest version number table 4131 stores the version number of the guest OS 12, the modification information of the guest OS 12, and the version number of application executed on the guest OS 12, for each type of the guest OS 12. The type of the guest OS 12 denotes the OS name, such as OS"A" or Windows (registered trademark), for example. The version number of the guest OS 12 denotes the number of revisions, when the guest OS 12 is revised. The modification information of the guest OS 12 is modification information for modifying the guest OS 12 of an old version number to the guest OS 12 of a new version number, when the guest OS 12 is revised. The version number of the application executed on the guest OS 12 denotes the number of revisions when the application is revised. An example of the application is "Word".

The latest state verification table 4161 stores the version number of the guest OS 12, the modification program information of the guest OS 12, and the verification information, for each type of the guest OS 12. The modification program information of the guest OS 12 includes the guest OS 12(P1) of an old version number and the guest OS 12(P2) of a new version number, when the guest OS 12 is revised. The guest OS 12(P1) and the guest OS 12(P2) are specified by the modification information. The modification program information is actually a pointer that points the addresses of the guest OS 12(P1) and the guest OS 12(P2). The verification information denotes a hash (hereinafter also called "hash value") of the guest OS 12(P1) and a hash of the guest OS 12(P2). As described above, the hash of the guest OS 12(P1) is notified from the vendor, for example. The hash of the guest OS 12(P2) is generated by hashing the updated guest OS 12 after the migration and update of the guest OS 12, for example.

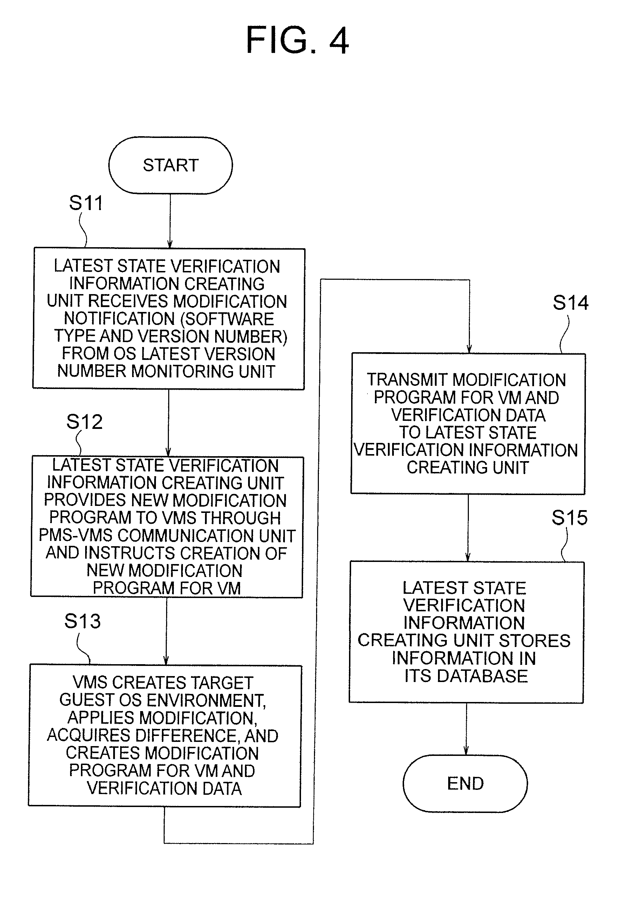

FIG. 4 is a flowchart of creating a modification program or verification data of an OS and an application.

The latest state verification information creating unit 416 receives a modification notification from the OS latest version number monitoring unit 413 (step S11). The modification notification includes the software type (type of the guest OS 12) and the version number of the software. Based on the modification program information, the latest state verification information creating unit 416 provides a revised program, such as the guest OS 12(P2), to the virtual machine server (VMS) 1 through the PMS-VMS communication unit 415 to instruct the creation of a new modification program for the virtual machine (VM) (step S12). The new modification program is, for example, a program for applying the difference (patch) between the guest OS 12(P1) and the guest OS 12(P2) to the guest OS 12(P1).

The virtual machine server 1 creates an environment for modifying the target guest OS 12, acquires the difference, creates a new modification program, executes the modification (executes the new modification program), and creates verification data (step S13). The virtual machine server 1 then transmits the new modification program and the verification data to the latest state verification information creating unit 416 through the PMS-VMS communication unit 415 (step S14). The latest state verification information creating unit 416 stores the information in the field of the verification information of the guest OS 12 on the latest state verification table 4161, which is a database of the latest state verification information creating unit 416 (step S15).

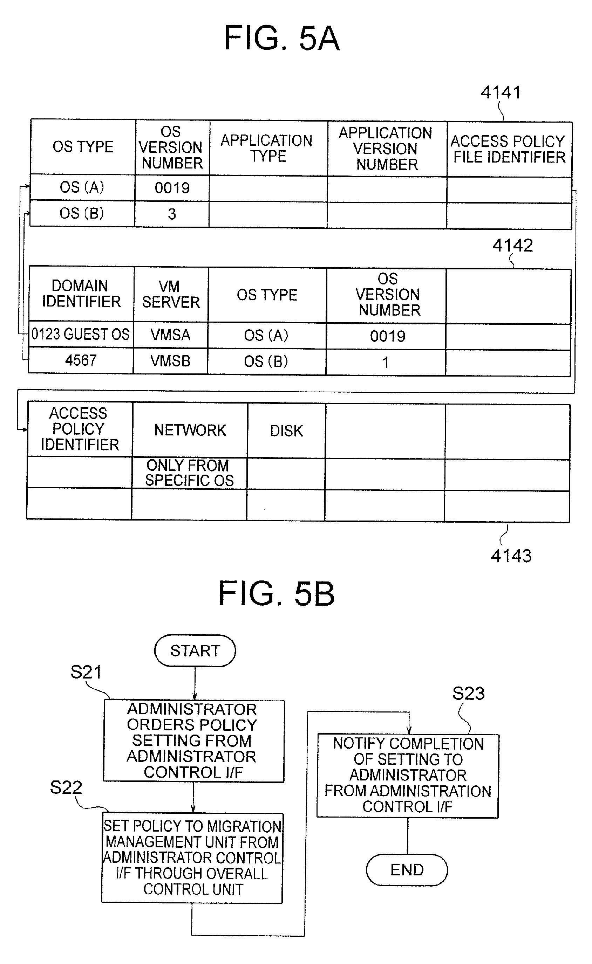

FIG. 5A is an example of the tables 4141 to 4143 for the guest OS 12 included in the policy management server 4.

The latest information management table 4141 stores the version number of the guest OS 12, the modification information of the guest OS 12, the type of application executed on the guest OS 12, the version number of the application, and the access policy file identifier, for each type of the guest OS 12. The type of application denotes the name of the application. The access policy identifier is an identifier (hereinafter, "ID") for uniquely identifying the file which stores the access policies of the guest OS 12.

The latest state holding table 4142 stores the virtual machine server, the type of guest OS 12, and the version number of the guest OS 12, for each domain identifier. The domain identifier is an identifier for uniquely identifying the domain (virtual machine 12 or guest OS 12). The virtual machine server denotes the name of the virtual machine server 1, such as VMSA. The type of guest OS 12 denotes the name of the guest OS 12 operated on the virtual machine server 1. The version number of the guest OS 12 denotes the version number of the guest OS 12.

The access policy table 4143 stores the network and the disk, for each access policy identifier. The network denotes the name of a specific virtual machine server 1 which is permitted to access the image of the guest OS 12 (guest OS image). The disk denotes the name of the storage device 15 which stores the guest OS image.

The latest state holding table 4142 is linked with the latest information of the guest OS 12 of the latest information management table 4141 by the type of the guest OS 12. The latest information management table 4141 is linked to the access policy table 4143 of the guest OS 12 by the access policy identifier.

FIG. 5B is a processing flowchart for setting a policy of the guest OS 12 of the policy management server (PMS) 4.

The administrator inputs a policy setting command from the administrator control I/F unit 411 (step S21). In response, the administrator control I/F unit 411 sets a policy to the migration management unit 414 through the overall control unit 412 (step S22). In other words, the tables 4141 to 4143 are created. The latest information management table 4141 and the latest state holding table 4142 are created based on the latest version number table 4131 (and the latest state verification table 4161). Therefore, the migration management unit 414 acquires the tables 4131 and 4161 through the overall control unit 412. The content of the access policy table 4143 is inputted by, for example, the administrator control I/F unit 411 in the step S21 along with the policy setting command. The administrator control I/F unit 411 then notifies the completion of the setting to the administrator (step S23).

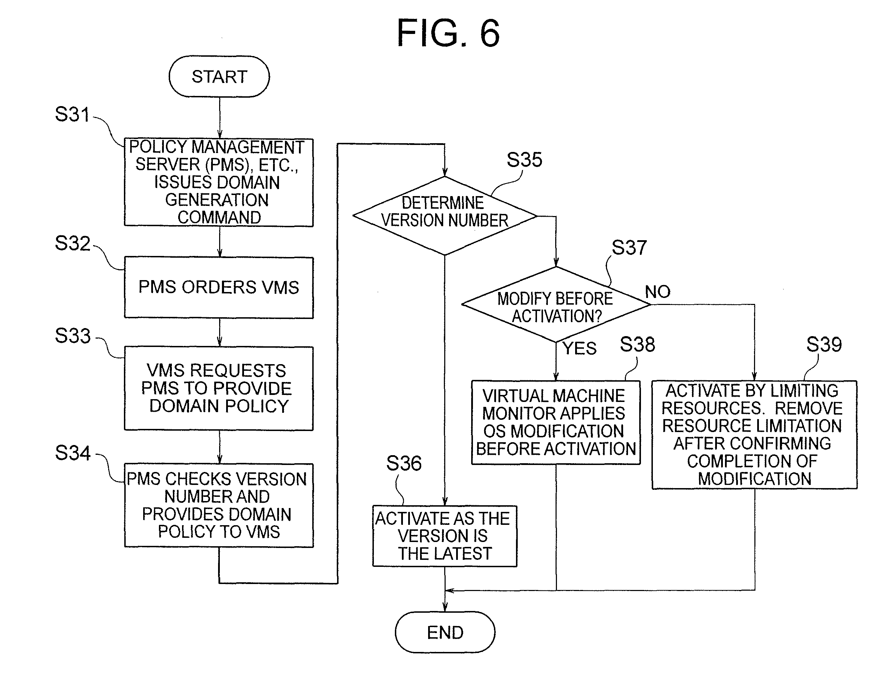

FIG. 6 is a flowchart of a migration processing of the guest OS 12 in the virtual machine server 1.

For example, the policy management server (PMS) 4 designates the virtual machine server 1 and the guest OS 12, and issues a domain generation command of the guest OS 12 (step S31). For this purpose, for example, the administrator inputs data to issue the domain generation command from the administrator control I/F unit 411. In response, the policy management server 4 transmits the domain generation command to the agent 21 of the virtual machine server 1 (step S32).

The agent 21 of the virtual machine server 1 requests the policy management server 4 to provide a domain policy of the guest OS 12 (step S33). The policy management server 4 checks the version number of the guest OS 12, and based on the check result, provides the domain policy of the guest OS 12 of the version number to the agent 21 of the virtual machine server 1 (step S34).

After receiving the domain policy, the agent 21 of the virtual machine server 1 determines the version number of the current guest OS 12 (step S35). When the current guest OS 12 is the latest version, the agent 21 of the virtual machine server 1 activates the guest OS 12 as the version number of the guest OS 12 is the latest version (step S36), and then the processing finishes.

When the current guest OS 12 is not the latest version, the agent 21 of the virtual machine server 1 further determines whether to modify the guest OS 12 before the activation of the guest OS 12 (step S37).

When the guest OS 12 is to be modified before the activation, the virtual machine monitor 13, in response to the request from the agent 21, modifies the guest OS 12 before the activation of the guest OS 12 in the virtual machine server 1 (step S38), and then the processing finishes. When the guest OS 12 is not to be modified before the activation, the virtual machine monitor 13, in response to the request from the agent 21, limits the use of hardware (or limits the resources) in the virtual machine server 1, activates the guest OS 12, and removes the limitation after confirming the completion of the modification of the guest OS 12 (step S39), and then the processing finishes. The modification completion processing of the guest OS 12, and the removing processing of the limitation after confirmation may be omitted.

The agent 21 included in the host OS 11 of the virtual machine server 1 and the processing of the agent 21 is described with reference to FIGS. 7 to 13.

FIG. 7 is an example of a configuration of the agent 21 of the virtual machine server 1.

The agent 21 includes a modification related information generating unit 211, an overall control unit 212, an OS state updating unit 213, a migration management unit 214, a VMS-PMS communication unit 215, and a latest boot verification information registration unit 216.

The overall control unit 212 controls the entire agent 21. The VMS-PMS communication unit 215 communicates between the virtual machine server 1 and the policy management server 4.

The modification related information generating unit 211 receives the update information of the guest OS 12 through the VMS-PMS communication unit 215. In response to the modification related information generation command from the policy management server 4, the modification related information generating unit 211 creates modification related information for the virtual machine server 1. As described above, the modification related information is a program or verification data for the modification. The modification related information is used to modify a guest OS image 12'. The guest OS image 12' is a state of the guest OS 12 which is stored in the storage device 15 of the virtual machine server 1 before the activation.

The OS state updating unit 213 is update means of the guest OS 12. In response to a command from the migration management unit 214, the OS state updating unit 213 updates the guest OS image 12' (or application). Specifically, the OS state updating unit 213 migrates the OS image 12' to the storage device 15 of the virtual machine server VMSB. The OS state updating unit 213 also modifies the guest OS image 12' migrated to the storage device 15 of the virtual machine server VMSB according to the update information and the modification information received from the agent 41. As described above, the same applies to the application.

The migration management unit 214 manages information for the migration (migration information) through the policy management server 4. The migration management unit 214 also monitors the activation and so on of the guest OS 12.

The latest boot verification information registration unit 216 is verification means for verifying the guest OS 12. In response to a command from the migration management unit 214, the latest boot verification information registration unit 216 sets the verification information of the guest OS image 12' of the guest OS 12, and verifies the guest OS 12.

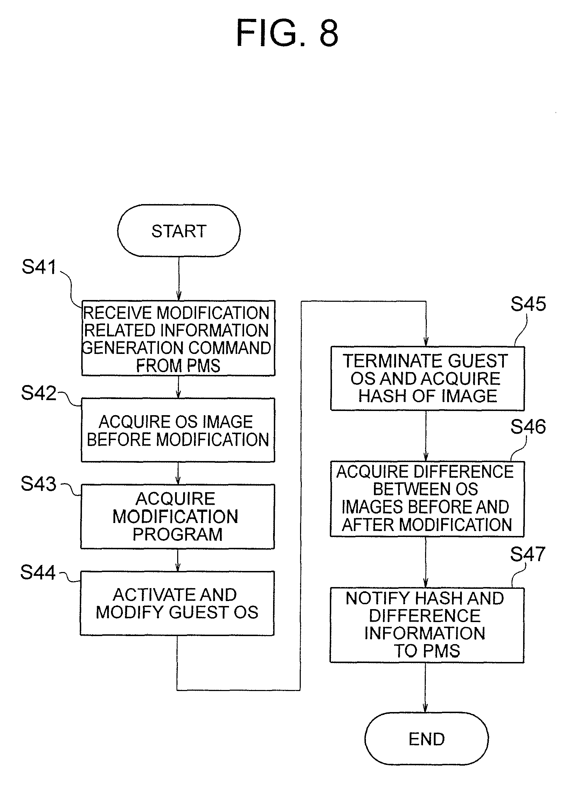

FIG. 8 is a flowchart of generation processing of the modification related information for the virtual machine server 1.

The modification related information generating unit 211 of the agent 21 of the virtual machine server VMSB receives a modification related information generation command from the policy management server 4 (step S41). In response, the modification related information generating unit 211 acquires the guest OS image 12' before the modification by, for example, the migration from the virtual machine server VMSA (step S42). Then, the modification related information generating unit 211 acquires a modification program of the guest OS 12 from the policy management server 4 (step S43). The modification related information generating unit 211 then activates the guest OS 12, and executes the modification program to modify the guest OS 12 (step S44).

The modification related information generating unit 211 then terminates the guest OS 12, and acquires the hash of the guest OS image 12' (step S45). In this way, the modification related information generating unit 211 acquires the hash of the modified OS image 12' when the migrated guest OS image 12' is modified. The modification related information generating unit 211 further acquires the difference between the guest OS image 12' after the modification and the guest OS image 12' before the modification (step S46). The modification related information generating unit 211 then notifies the acquired hash and the difference (difference information) to the policy management server 4 (step S47).

In the foregoing processing, as described in the steps S35 to S39, the agent 21 receives the update information from the agent 41, receives the modification information from the agent 41 when the migrated OS image 12' is to be modified, and modifies the migrated OS image 12' based on the received modification information. The agent 21 activates the migrated OS image 12' after the modification or after limiting the use of hardware by the migrated OS image 12' when the migrated OS image 12' is to be modified.

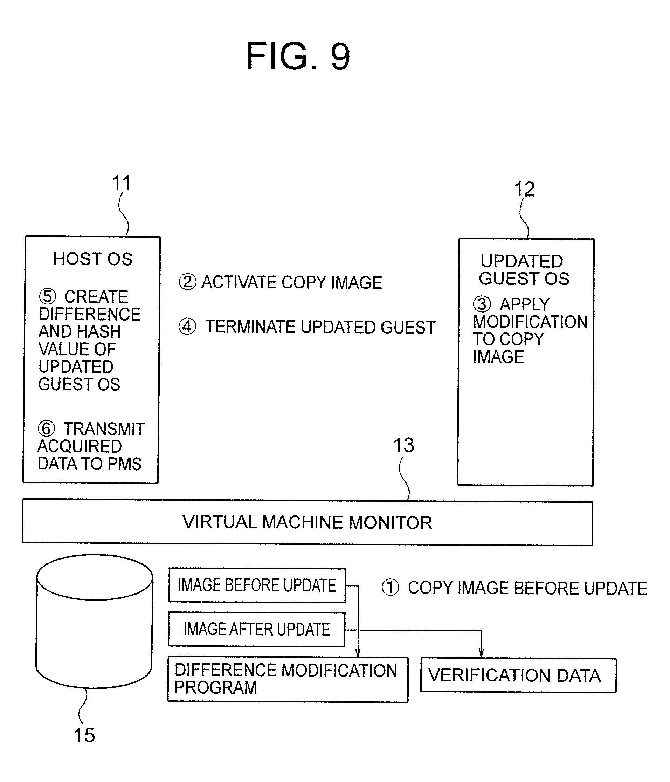

FIG. 9 is a creating processing of a modified image of the guest OS image 12'.

The agent 21 of the host OS 11 of the virtual machine server VMSB copies the guest OS image 12' before the update from the storage device of the virtual machine server VMSA to the storage device 15 of the virtual machine server VMSB (#1). Thus, the movement (migration) of the guest OS image 12' is copying of the guest OS image 12'.

The agent 21 then activates the copied guest OS image 12' (#2), modifies the activated guest OS (updated guest OS) 12 (#3), and terminates the updated guest OS 12 (#4).

The agent 21 then creates the difference of the guest OS 12 and the hash of the updated guest OS 12 (#5), and transmits the created difference and the hash to the policy management server 4 (#6).

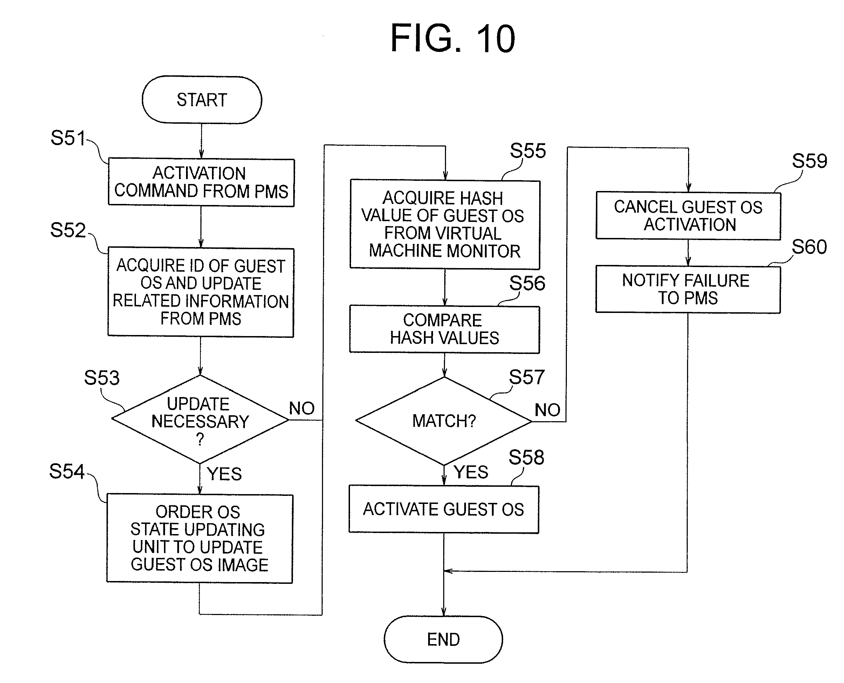

FIG. 10 is a flowchart of monitoring processing at the activation of the guest OS.

In response to the reception of an activation command from the policy management server 4 (step S51), the migration management unit 214 of the agent 21 of the virtual machine server 1 acquires an ID, update related information and so on of the guest OS 12 to be activated from the policy management server 4 (step S52).

The migration management unit 214 then determines whether the guest OS 12 needs to be updated (step S53). When the update is necessary, the migration management unit 214 orders the update of the guest OS image 12' to the OS state updating unit 213 (step S54). In response, the OS state updating unit 213 updates the guest OS image 12'. When the update is not necessary, step S54 is skipped.

The migration management unit 214 then acquires the hash value of the updated guest OS 12 from the virtual machine monitor 13 (step S55), and compares the acquired hash value and the hash value of the updated guest OS 12 (step S56). The migration management unit 214 determines whether the hash values match (step S57). The policy management server 4 provides the hash value of the updated guest OS 12 as update related information of the guest OS 12 to be activated.

When the hash values match, the agent 21 activates the updated guest OS 12 (step S58), and then the processing finishes. When the hash values do not match, the agent 21 cancels activating the updated guest OS 12 (step S59), and notifies the failure to the policy management server 4 (step S60), and then the processing finishes.

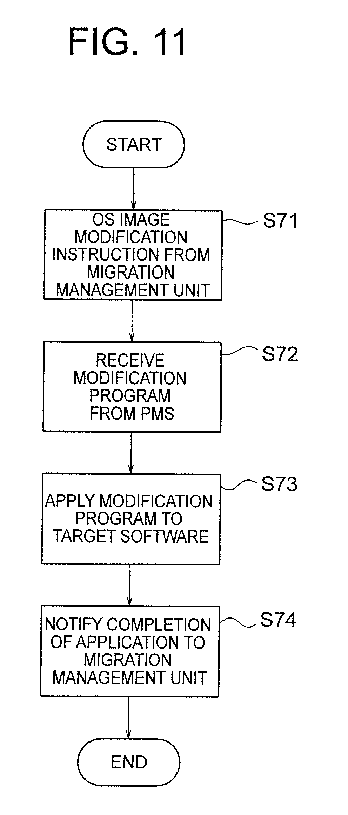

FIG. 11 is a flowchart of modifying an OS image.

The OS state updating unit 213 of the agent 21 receives an instruction for modifying the OS image 12' from the migration management unit 214 (step S71).

In response, the OS state updating unit 213 receives a modification program of the guest OS image 12' from the policy management server 4 (step S72), and applies the received modification program to the software to be modified (target software), or the guest OS image 12' (step S73). As a result, the guest OS image 12' is modified. The OS state updating unit 213 then notifies the completion of the application to the migration management unit 214 (step S74).

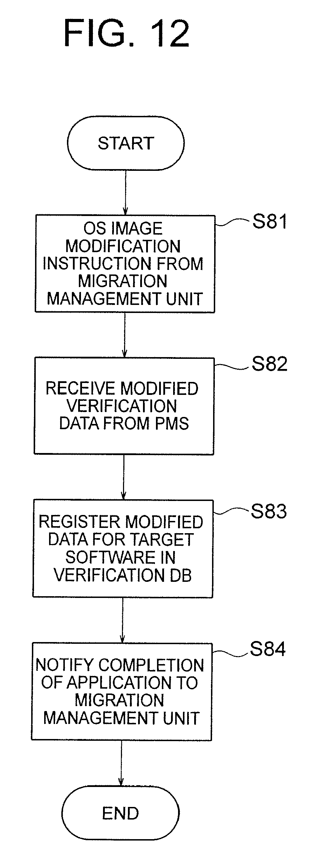

FIG. 12 is a flowchart of registration processing of boot information.

The latest boot verification information registration unit 216 receives an instruction for modifying the guest OS image 12' from the migration management unit 214 (step S81). In response, the latest boot verification information registration unit 216 receives verification data for the modified guest OS 12 from the policy management server 4 (step S82). Then, the latest boot verification information registration unit 216 registers the modified data for the guest OS 12, which is the target software, in a verification DB included in the latest boot verification information registration unit 216 (step S83). The latest boot verification information registration unit 216 then notifies the completion of the application to the migration management unit 214 (step S84).

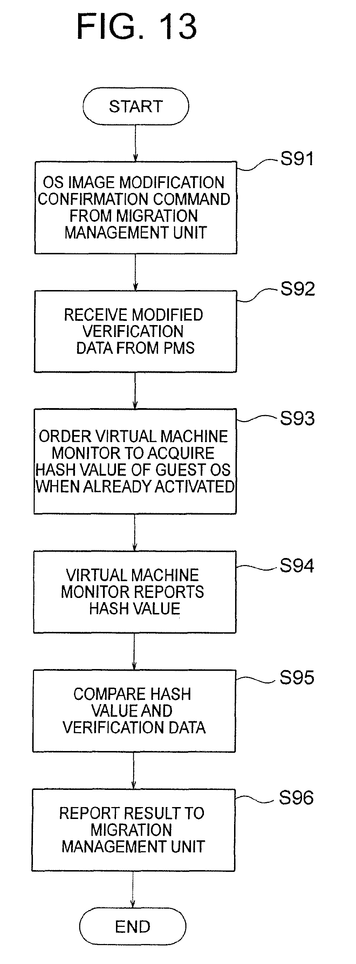

FIG. 13 is a flowchart of verifying the modification of an OS image.

The latest boot verification information registration unit 216 receives a command for confirming the modification of the OS image 12' from the migration management unit 214 (step S91). In response, the latest boot verification information registration unit 216 receives verification data for the modified guest OS 12 from the policy management server 4 (step S92).

When the guest OS 12 is already activated, the latest boot verification information registration unit 216 orders the virtual machine monitor 13 to acquire the hash value of the guest OS 12 (step S93). In response, the virtual machine monitor 13 notifies (reports) the hash value of the guest OS 12 to the latest boot verification information registration unit 216 (step S94).

The latest boot verification information registration unit 216 then compares the notified hash value and the verification data (step S95), and notifies the result of the comparison to the migration management unit 214 (step S96).

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer readable medium, or it could, for example, be in the form of a signal such as a downloadable data signal provided from an Internet website, or it could be in any other form.

## Claims

1. A virtual machine system comprising:
a first information processing apparatus including an arithmetic processing unit and a storage device, a plurality of virtual machines each including an OS operated on the arithmetic processing unit, and a virtual machine monitor controlling the plurality of virtual machines;
a second information processing apparatus including an arithmetic processing unit and a storage device, a plurality of virtual machines each including the OS operated on the arithmetic processing unit, and a virtual machine monitor controlling the plurality of virtual machines;
a management apparatus connected to the first information processing apparatus and the second information processing apparatus through a network;
a management unit provided on the management apparatus, and managing update information indicating an update of the OS and modification information for modifying the OS; and
updating units provided on the first information processing apparatus and the second information processing apparatus, migrating an OS image that is the OS stored in the storage device of the first information processing apparatus to the storage device of the second information processing apparatus, and modifying the OS image migrated to the storage device of the second information processing apparatus according to the update information and the modification information received from the management unit.

2. The virtual machine system according to claim 1, wherein the updating unit of the second information processing apparatus receives the update information from the management unit, receives the modification information from the management unit when the migrated OS image is to be modified, and modifies the migrated OS image based on the received modification information.

3. The virtual machine system according to claim 2, wherein, when the migrated OS image is to be modified, the updating unit of the second information processing apparatus activates the migrated OS image after modifying the migrated OS image or activates the migrated OS image by limiting use of the hardware resources by the migrated OS image.

4. The virtual machine system according to claim 2 or 3, wherein, when the migrated OS image is modified, the updating unit of the second information processing apparatus acquires a hash of the modified image and a difference between the OS images before the modification and after the modification, and notifies the acquired hash and the acquired difference to the management unit.

5. The virtual machine system according to any preceding claim, wherein:
the plurality of virtual machines of the first information processing apparatus include a guest OS that executes applications and a host OS that controls the first information processing apparatus,
the plurality of virtual machines of the second information processing apparatus include a guest OS that executes applications and a host OS that controls the second information processing apparatus,
the management unit manages version numbers of the guest OS as update information, and
the updating units are provided on the host OS operated on the first information processing apparatus and on the host OS operated on the second information processing apparatus.

6. The virtual machine system according to claim 5,
wherein the management unit further manages update information indicating updates of the applications and modification information for modifying the applications, and
wherein the updating unit migrates the applications stored in the storage device of the first information processing apparatus to the storage device of the second information processing apparatus, and modifies the applications migrated to the storage device of the second information processing apparatus based on the update information and the modification information from the management unit.

7. The virtual machine system according to any preceding claim, wherein the management unit further comprises a tracking unit tracking updates of the OS, and a status management unit managing the status of the OS.

8. A management method of a virtual machine system, the virtual machine system comprising a first information processing apparatus including an arithmetic processing unit and a storage device, a plurality of virtual machines each including an OS operated on the arithmetic processing unit, and a virtual machine monitor controlling the plurality of virtual machines; a second information processing apparatus including an arithmetic processing unit and a storage device, a plurality of virtual machines each including the OS operated on the arithmetic processing unit, and a virtual machine monitor controlling the plurality of virtual machines; and a management apparatus connected to the first information processing apparatus and the second information processing apparatus through a network, the management method comprising:
managing, at the management apparatus, update information indicating an update of the OS and modification information for modifying the OS;
migrating an OS image of the OS stored in the storage device of the first information processing apparatus to the storage device of the second information processing apparatus; and
modifying, at the second information processing apparatus, the OS image migrated to the storage device of the second information processing apparatus according to the update information and the modification information received from the management apparatus.

9. A computer-readable recording medium recording a management program of a virtual machine system, the virtual machine system comprising a first information processing apparatus including an arithmetic processing unit and a storage device, a plurality of virtual machines each including an OS operated on the arithmetic processing unit, and a virtual machine monitor controlling the plurality of virtual machines; a second information processing apparatus including an arithmetic processing unit and a storage device, a plurality of virtual machines each including the OS operated on the arithmetic processing unit, and a virtual machine monitor controlling the plurality of virtual machines; and a management apparatus connected to the first information processing apparatus and the second information processing apparatus through a network, the management program causing a computer as the virtual machine system to execute the operation of:
managing, at the management apparatus, update information indicating an update of the OS and modification information for modifying the OS;
migrating an OS image of the OS stored in the storage device of the first information processing apparatus to the storage device of the second information processing apparatus; and
modifying, at the second information processing apparatus, the OS image migrated to the storage device of the second information processing apparatus according to the update information and the modification information received from the management apparatus.
